# EUROPÄISCHE PATENTSCHRIFT

(11) **EP 1 952 505 B1**
(45) Veröffentlichungstag und Bekanntmachung des Hinweises auf die Patenterteilung: **09.03.2011**
(21) Anmeldenummer: 06804815.6
(22) Anmeldetag: 18.10.2006
(51) Int. Cl.: H02J 13/00, H01H 9/16

(54) **ÜBERMITTLUNG EINER BINÄREN SCHALTERSTELLUNG**
TRANSMISSION OF A BINARY SWITCH POSITION
TRANSMISSION D'UNE POSITION DE COMMUTATEUR BINAIRE

(30) Priorität: 25.11.2005 EP 05405664
(43) Veröffentlichungstag der Anmeldung: 06.08.2008
(73) Patentinhaber: ABB Technology AG, 8050 Zürich (CH)
(72) Erfinder: BORNER, Christian, CH-5213 Villnachern (CH); METTLER, Ivan, CH-6423 Seewen (CH)
(74) Vertreter: ABB Patent Attorneys
(86) Internationale Anmeldenummer: PCT/CH2006/000580
(87) Internationale Veröffentlichungsnummer: WO 2007/059637

(56) Entgegenhaltungen:
- EP-A- 0 806 829
- EP-A- 1 026 862
- EP-A- 1 137 024
- DE-A1- 10 118 189
- DE-B1- 1 665 524

## Beschreibung

### TECHNISCHES GEBIET

Die Erfindung bezieht sich auf das Gebiet der Schutztechnik und der Stationsleittechnik. Sie bezieht sich auf ein Verfahren und eine Vorrichtung zur Übermittlung einer binären Schalterstellung gemäss dem Oberbegriff der Patentansprüche 1 und 5.

### STAND DER TECHNIK

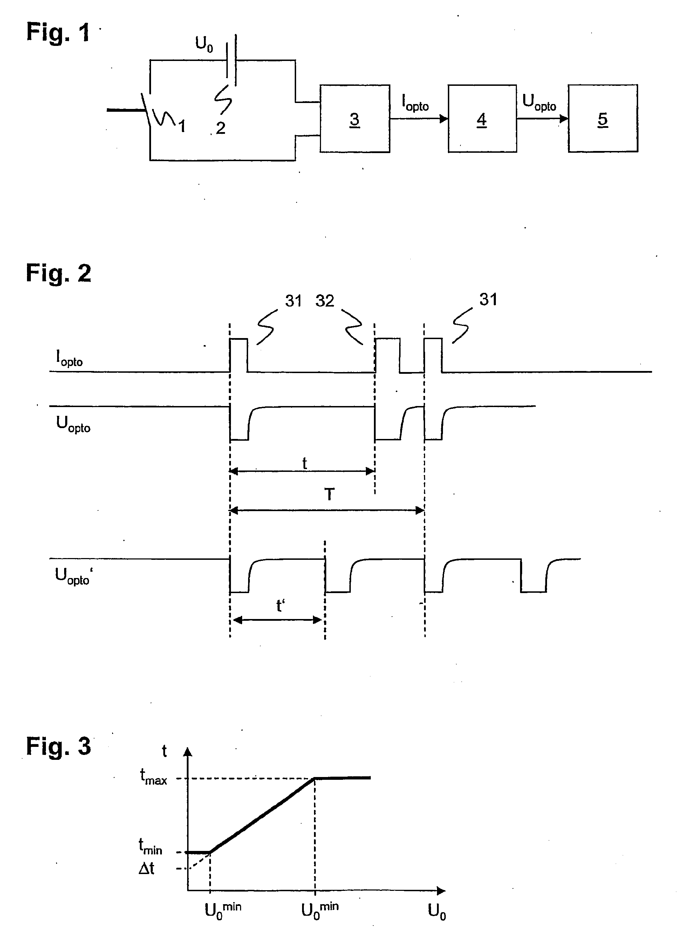

Aus der Europäischen Patentanmeldung EP-A 1 137 024 ist eine Vorrichtung zur Überwachung und Übermittlung einer Schalterstellung, beispielsweise für eine Hoch- oder Mittelspannungsschaltanlage, bekannt. Fig.1 zeigt schematisch eine solche Vorrichtung, mit einem Schalter 1, der über eine Hilfsspannungsquelle 2 mit einem Codierer 3 verbunden ist. Der Codierer 3 ist über ein Übertragungsmittel 4 mit einem Decodierer 5 verbunden. Die Vorrichtung hat die Aufgabe, die Stellung des Schalters 1 zu überwachen und eine Höhe U₀ der Hilfsspannung zu übermitteln, wobei der Codierer 3 und der Decodierer 5 durch das beispielsweise optische Komponenten umfassende Übertragungsmittel 4 galvanisch getrennt sind.

Dabei wird bei geschlossenem Schalter 1 der Codierer 3 ausschliesslich durch die Hilfsspannungsquelle 2 mit elektrischer Energie versorgt. Der Codierer 3 erzeugt eine pulsdauermodulierte Impulsfolge mit einer bestimmten Einschaltdauer oder Pulslänge, wobei die Einschaltdauer eine Funktion der Hilfsspannung U₀ ist. Für einen beliebig kleinen Wert der Hilfsspannung U₀ beträgt die Einschaltdauer 50%, d.h. eine Pulslänge entspricht genau der halben Zykluszeit. Für grösser werdende Werte der Hilfsspannung U₀ nimmt die Einschaltdauer ab, unterschreitet jedoch nicht eine vorgegebene minimale Einschaltdauer. Ein Vorhandensein des pulsdauermodulierten Signals bedeutet also, dass der Schalter geschlossen ist, und die Einschaltdauer gibt den Wert der Hilfsspannung U₀ an. Die Erzeugung der pulsdauermodulierten Impulsfolge ist bevorzugt in einem speziell für die Codierung ausgebildeten Baustein (Application Specific Integrated Circuit ASIC) implementiert. Ebenso kann für die Erfassung und Auswertung der Signale ein speziell für die Decodierung ausgebildeter und von einem nachgeschalteten Mikroprozessor unabhängiger Baustein (Field Programmable Gate Array FPGA) vorgesehen sein.

Die Übertragungsmittel für das pulsdauermodulierte Signal umfassen geeigneterweise einen Optokoppler, welcher einen vom Codierer kommenden Eingangsstrom Iₒₚₜₒ in eine vom Decodierer zu verarbeitende Ausgangsspannung Uₒₚₜₒ überträgt. In dem vorbekannten Pulsdauermodulationsverfahren ist zu berücksichtigen, dass eine Einschaltflanke und eine Ausschaltflanke eines Pulses durch den Optokoppler unterschiedlich verzögert werden, insbesondere in Abhängigkeit der Temperatur, was Ungenauigkeiten in der Bestimmung der relevanten Zeitpunkte und somit der Pulslänge zur Folge haben kann. Bei einer Kalibrierung der Überwachungsvorrichtung kann aus diesem Grund eine Verzögerung beispielsweise einer steigenden Flanke der Ausgangsspannung des Optokopplers gemessen und für den Betrieb ein entsprechender Korrekturwert eingeführt werden.

### DARSTELLUNG DER ERFINDUNG

Aufgabe der vorliegenden Erfindung ist es, eine Überwachung und Übermittlung einer binären Schalterstellung durch eine codierte Schaltung zu vereinfachen und durch unterschiedliche Pulsflankenverzögerung bedingte Korrekturen zu reduzieren. Diese Aufgabe wird durch ein Verfahren und eine Vorrichtung zur Übermittlung einer binären Schalterstellung mit den Merkmalen der Patentansprüche 1 und 5 gelöst. Weitere vorteilhafte Ausführungsformen gehen aus den abhängigen Patentansprüchen hervor.

Kern der Erfindung ist es, die durch Auswertung der beiden unterschiedlich verzögerten Pulsflanken eines einzigen Pulses verursachte Ungenauigkeit zu eliminieren, indem eine bei geschlossener Schalterstellung zu codierende Hilfsspannung durch zwei gleichartige Pulsflanken zweier unterschiedlicher Pulse codiert wird, also entweder durch die zwei Einschalt- oder die zwei Ausschaltflanken der beiden Pulse. Dadurch wird die vorbekannte Pulsdauermodulation durch eine Pulsfrequenzmodulation ersetzt.

Bevorzugt werden die zwei genannten Pulse innerhalb einer von der Hilfsspannung unabhängigen Grundperiode wiederholt generiert, und weisen zu Unterscheidungszwecken eine unterschiedliche, jedoch von der Hilfsspannung unabhängige Einschaltdauer oder Pulslänge auf.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 schematisch eine Vorrichtung zur Übermittlung einer Schalterstellung,
Fig.2 einen ersten und zweiten zeitlichen Verlauf pulsfrequenzmodulierter Signale, und
Fig.3 eine Kennlinie einer Verzögerungszeit in Abhängigkeit einer Hilfsspannung.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

Fig.1 zeigt ein Blockschaltbild einer Vorrichtung zur Überwachung und Übermittlung der Schalterstellung eines Schalters 1. In einem Speise- oder Batteriestromkreis ist der Schalter 1 mit einer Hilfsspannungsquelle 2 verbunden, welche eine konstante Hilfsspannung U₀ erzeugt. Bei geschlossenem Schalter 1 liegt die Hilfsspannung U₀ an einem mit dem Schalter 1 und der Hilfsspannungsquelle 2 verbundenen Codierer 3 an. Der Codierer 3 detektiert die binäre Schalterstellung des Schalters 1 und wandelt diese Information in ein elektrisches Signal um. Dieses elektrische Signal wird von einem Übertragungsmittel 4, vorzugsweise einem Optokoppler, auf eine galvanisch getrennte Sekundärseite übertragen. Auf dieser Sekundärseite wird das übermittelte Signal durch einen Decodierer 5 ausgewertet, d.h. im Decodierer 5 wird die Codierung der Hilfsspannung in eine Pulsdauermodulation rückgängig gemacht oder decodiert, womit nicht nur eine hilfsspannungsunabhängige Übertragung der Schalterstellung des Schalters 2 erreicht wird, sondern gleichzeitig auch noch eine Information über die Höhe der Hilfsspannung U₀ übermittelt werden kann.

Der Schalter 1 ist beispielsweise ein Hilfsschalter eines Hochspannungsschalters und mechanisch mit diesem gekoppelt, so dass aus der Stellung des Hilfsschalters in einfacher Weise auf die Stellung des Hochspannungsschalters geschlossen werden kann. Solche Hilfsschalter sind von grosser Bedeutung, ermöglichen sie doch die Überwachung eines Hochspannungsschalters auf kleinem Leistungsniveau. Zur Überwachung mehrerer Schalter können eine entsprechende Anzahl Codierer 3 und Übertragungsmittel 4 auf einer Printplatine angeordnet sein, wobei vorzugsweise die jeweiligen separaten Ausgangsspannungen Uₒₚₜₒ der Optokoppler von einem einzigen Decodierer 5 ausgewertet werden.

Die Hilfsspannung U₀, welche bei geschlossenem Schalter am Eingang des Codierers 3 liegt, wird durch diesen in eine pulsfrequenzmodulierte Pulsfolge umgewandelt, deren Verzögerungszeit oder Codierzeit t über eine Kennlinie von der Höhe der Hilfsspannung U₀ abhängt. Zur Erfassung und Auswertung der eintreffenden Pulsfolgen ist die Kennlinie auch dem Decodierer bekannt. Fig.2 zeigt beispielhafte Pulsfolgen, insbesondere zuoberst einen zeitlichen Verlauf eines ersten pulsfrequenzmodulierten Stromsignales Iₒₚₜₒ, mit welchem ein Optokoppler angesteuert wird. Entsprechend dem Stromsignal Iₒₚₜₒ entsteht am Ausgang des Optokopplers ein Spannungssignal Uₒₚₜₒ mit dem in der Mitte der Fig.2 gezeigten Verlauf. Die Einschaltflanken zweier aufeinander folgender Pulse 31, 32 des Spannungssignals Uₒₚₜₒ definieren die Verzögerungszeit t. Jeweils nach einer von der Hilfsspannung unabhängigen Grundperiode oder Zykluszeit T werden die beiden Pulse 31, 32 erneut erzeugt. Eine Einschaltdauer oder Pulslänge des ersten oder Start-Pulses 31 ist leicht kürzer als die Einschaltdauer eines zweiten oder verzögerten Pulses 32, wodurch die beiden Pulse beim Decodierer unterschieden werden können und eine eindeutige Bestimmung der Verzögerungszeit möglich wird. Zuunterst in Fig.2 ist ein zeitlicher Verlauf eines zweiten Spannungssignales Uₒₚₜₒ' gezeigt, für einen zweiten Wert der Hilfsspannung U₀'. Letzterer ist tiefer als der erste Wert und wird durch eine kürzere Verzögerungszeit t' zwischen zwei gleichartigen Signalflanken codiert.

Fig.3 schliesslich zeigt ein Beispiel für die vorgenannte Kennlinie zur Codierung der Hilfsspannung U₀ als Verzögerungszeit t eines pulsfrequenzmodulierten Signals. Dabei steigt die Verzögerungszeit t zwischen einem minimalen Wert U₀^{min} und einem maximalen Wert U₀^{max} linear mit der Hilfsspannung U₀. Unterhalb von U₀^{min} und oberhalb von U₀^{max} liegende Werte werden durch eine minimale tₘᵢₙ respektive maximale tₘₐₓ Verzögerung dargestellt. Dabei bewirkt ein Offset Δt, dass die Pulslänge des Startpulses 31 kleiner als die minimale Verzögerung tₘᵢₙ ist. Weiter ist die Pulslänge des verzögerten Pulses 32 kleiner als die Differenz zwischen der Grundperiode T und der maximalen Verzögerung tₘₐₓ.

Bei den üblicherweise verwendeten Hilfsspannungen von 24 V bis 250 V DC werden die Endwerte des Hilfsspannungsbereiches U₀^{min}, U₀^{max} zur Sicherstellung einer ausreichenden Informationsübertragung und mit genügend Reserve für etwaige Schwankungen gewählt, beispielsweise U₀^{min} = 15 V und U₀^{max} = 221 V. Der letztgenannte obere Grenzwert entspricht nur gut 80% einer maximalen Batteriespannung und bedingt eine Codierung aller höheren Hilfsspannungswerte durch den oberen Grenzwert. Dieser Informationsverlust gestattet im Gegenzug eine Auflösung der Hilfsspannung durch einen 8 Bit A/D Wandler mit 1V pro Bit. Die Verzögerungszeit t wird in Bruchteilen der Grundperiode T angegeben, bei einer 8 Bit Auflösung ist beispielsweise tₘᵢₙ bei 21/256 und tₘₐₓ bei 227/256 festgelegt, so dass die Verzögerung zwischen den angegebenen Grenzwerten jeweils per 1 V um T/256 erhöht wird. Durch eine zusätzliche Eichung eines Oszillators und einer Referenz im Fabrikationsprozess ist es möglich, direkt die Verzögerungszeit t zu messen, ohne dass dazu auch ein Wert der Grundperiode T bestimmt werden müßte.

Beim Schliessen der Kontakte des Schalters sorgt der Codierer dafür, dass durch einen Initialstrompuls im Speise- oder Batteriestromkreis die Kontakte des Schalters fritten. Dadurch wird ein eventuell vorhandener isolierender Film auf den Kontaktflächen zerstört und ein zuverlässiges Kontaktverhalten des Schalters gewährleistet. Ein derartiger Initialstrompuls von beispielsweise 15 mA Stärke und 10 ms Dauer übertrifft im Allgemeinen die Dauer der Grundperiode T von typischerweise 600 µs um ein Vielfaches.

### BEZUGSZEICHENLISTE

- 1: Schalter
- 2: Hilfsspannungsquelle
- 3: Codierer
- 4: Übertragungsmittel
- 5: Decodierer

## Patentansprüche

1. Verfahren zur Übermittlung einer binären Schalterstellung eines Schalters (1), wobei bei geschlossener Schalterstellung eine Hilfsspannung (U₀) an einem Codierer (3) anliegt und durch den Codierer (3) eine die Höhe der Hilfsspannung (U₀) codierende Folge von Pulsen (Iₒₚₜₒ) zur Übermittlung an einen Decodierer (5) generiert wird,
**dadurch gekennzeichnet, dass** die Höhe der Hilfsspannung (U₀) gemeinsam durch eine Verzögerungszeit (t) zwischen gleichartigen Flanken zweier aufeinander folgender Pulse (31, 32) mit unterschiedlichen Pulslängen codiert wird.

2. Verfahren nach Anspruch 1, **dadurch gekennzeichnet, dass** die zwei Pulse (31, 32) jeweils nach einer von der Höhe der Hilfsspannung (U₀) unabhängigen Grundperiode (T) erneut generiert werden.

3. Verfahren nach Anspruch 1, **dadurch gekennzeichnet, dass** die Verzögerungszeit (t) durch eine linear mit der Höhe der Hilfsspannung (U₀) ansteigende Kennlinie gegeben wird, deren Extrapolation gegen den Hilfsspannungswert Null einen positiven Offset (Δt) ergibt.

4. Verfahren nach einem der Ansprüche 1 bis 3, **dadurch gekennzeichnet, dass** der Codierer (3) bei einem Schliessen des Schalters (1) in einem den Codierer (3) und den Schalter (1) umfassenden Speisestromkreis einen Initialstrompuls erzeugt.

5. Vorrichtung zur Übermittlung einer binären Schalterstellung eines Schalters (1) an einen Decodierer (5), umfassend einen bei geschlossener Schalterstellung mit einer Hilfsspannung (U₀) versorgten und diese durch eine Pulsfolge codierenden Codierer (3),
**dadurch gekennzeichnet, dass** der Codierer (3) zur Erzeugung zweier aufeinander folgender Pulse (31, 32) mit unterschiedlichen Pulslängen ausgebildet ist, welche gemeinsam die Höhe der Hilfsspannung (U₀) durch eine Verzögerungszeit (t) zwischen gleichartigen Flanken der Pulse (31, 32) codieren.

## Claims

1. Method for transmitting a binary switch position of a switch (1), wherein, when the switch position is closed, an auxiliary voltage (U₀) is applied to a coder (3) and the coder (3) generates a sequence of pulses (Iₒₚₜₒ), which codes the level of the auxiliary voltage (U₀), for transmission to a decoder (5),
**characterized in that** the level of the auxiliary voltage (U₀) is jointly coded by a delay time (t) between identical edges of two successive pulses (31, 32) with different pulse lengths.

2. Method according to Claim 1, **characterized in that** the two pulses (31, 32) are each generated again after a basic period (T) which is independent of the level of the auxiliary voltage (U₀).

3. Method according to Claim 1, **characterized in that** the delay time (t) is given by a characteristic curve which rises linearly with the level of the auxiliary voltage (U₀) and the extrapolation of which towards the auxiliary voltage value of zero results in a positive offset (Δt).

4. Method according to one of Claims 1 to 3, **characterized in that**, during closing of the switch (1), the coder (3) generates an initial current pulse in a feed circuit comprising the coder (3) and the switch (1).

5. Apparatus for transmitting a binary switch position of a switch (1) to a decoder (5), comprising a coder (3) which is supplied with an auxiliary voltage (U₀) when the switch position is closed and codes said voltage by means of a pulse sequence,
**characterized in that** the coder (3) is designed to generate two successive pulses (31, 32) with different pulse lengths, which pulses jointly code the level of the auxiliary voltage (U₀) by means of a delay time (t) between identical edges of the pulses (31, 32).

## Revendications

1. Procédé pour la transmission d'une position binaire de commutateur d'un commutateur (1), dans lequel en position fermée du commutateur, une tension auxiliaire (U₀) est appliquée à un codeur (3) et le codeur (3) générant une succession d'impulsions (Iₒₚₜₒ) codant le niveau de la tension auxiliaire (U₀) pour la transmission vers un décodeur (5),
**caractérisé en ce que** le niveau de la tension auxiliaire (U₀) est conjointement codée par une unité de temps de retard (t) sous la forme de différentes longueurs d'impulsions entre des fronts similaires de deux impulsions successives (31, 32).

2. Procédé selon la revendication 1, **caractérisé en ce que** les deux impulsions (31, 32) sont chaque fois générées à nouveau après un période de base (T) indépendante du niveau de la tension auxiliaire (U₀).

3. Procédé selon la revendication 1, **caractérisé en ce que** le temps de retard (t) est donné par une courbe caractéristique croissante avec le niveau de la tension auxiliaire (U₀), dont l'extrapolation vers la valeur nulle de la tension auxiliaire donne un offset positif (Δt).

4. Procédé selon une des revendications 1 à 3, **caractérisé en ce que** lors d'une fermeture du commutateur (1), le codeur (3) génère une impulsion de courant initiale dans un circuit électrique d'alimentation comportant le codeur (3) et le commutateur (1).

5. Dispositif pour la transmission d'une position binaire de commutateur d'un commutateur (1) vers un décodeur (5), comportant en position fermée du commutateur, un codeur (3) alimenté par une tension auxiliaire (U₀) et codant celle-ci par une succession d'impulsions,
**caractérisé en ce que** le codeur (3) est développé pour la génération de deux impulsions successives (31, 32) de différentes longueurs d'impulsions codant conjointement le niveau de la tension auxiliaire (U₀) sous la forme d'un temps de retard (t) entre des fronts similaires des impulsions (31, 32).
